# EUROPEAN PATENT APPLICATION

(11) **EP 0 619 448 A1**
(43) Date of publication of application: **12.10.1994**
(21) Application number: 94302181.6
(22) Date of filing: 25.03.1994
(51) Int. Cl.: F16J 15/54, F16J 15/56, F16J 15/34

(54) **Split mechanical face seal**

(30) Priority: 05.04.1993 US 42867
(71) Applicant: JOHN CRANE, INC., Morton Grove, IL 60053 (US)
(72) Inventor: Browar, Orest, Chicago, Illinois 60641 (US); Ralle, Angelo, Palatine, Illinois 60067 (US); Radosav, Jon J., Glenview, Illinois 60025 (US); Dudek, David M., Schaumburg, Illinois 60173 (US)
(74) Representative: Watts, Peter Graham

(57) **Abstract**

A totally split mechanical face seal being installable and replaceable without necessitating breakdown of the shaft and/or housing. The inventive split seal is well suited for replacement of packing or stuffing in heavy duty or inaccessible locations. The inventive seals include a sealing element (112) that seals the primary ring (106) against the shaft (16) and rigidly positions the primary ring (106) in the axial, circumferential and radial directions, and also includes a sealing element (740 which seals the mating ring (84) against the housing (24) and non-rigidly positions the mating ring (84) in the axial direction while simultaneously providing an axial biasing force on the mating ring to provide mating contact of the two rings (84, 106). For applications where gross displacements of the shaft (16) relative to the housing (24) are expected, a thrust bearing or a connection (278, 256, 240, 242, 244) is made between the mating ring assembly (80) and rotating elements associated with the shaft (16). Alternatively, a bearing assembly (342) is provided for maintaining the axial position of the primary ring assembly (104) and both primary and mating rings (106, 84) are held in approximately the same positions relative to each other regardless of the gross shaft displacements.

## Description

This is a continuation-in-part of co-pending application Serial No 07/805,470 filed on December 10, 1991, which is a continuation of application Serial No 07/529,208 filed on May 25, 1990, now US Patent No 5,114,163.

The related patent, US Patent No 5,114,163, of which this is a continuation-in-part, includes an embodiment illustrated in Fig. 8 for applications in which the shafts of the operating devices, such as pumps or turbines, are subject to greater axial shifts than those which would normally be expected. The design of that embodiment utilises a thrust bearing to move a rotationally stationary split holder in conjunction with the axial movement of the shaft. That portion of the specification relating to the embodiment of Fig. 8 and other relevant portions of US Patent No 5,114,163 are incorporated by reference herein where appropriate.

The Fig. 8 embodiment referenced in parent US Patent No 5,114,163 by and large is able to withstand axial displacements of small proportions, on the order of 1/2 to 1 inch. However, any axial displacements greater than these would be hampered by the obstruction of the housing against the split holder member, which has only a limited degree of freedom in the axial direction before the seal formed by the O-ring disposed between the split holder member and the housing fails. Alternatively, the radially extending shoulder portion of the split holder will impinge on the radially extending wall of the housing.

Thus, what is necessary is a split mechanical face seal which can withstand much greater proportional axial displacements, up to 6 inches, without sacrificing the sealing characteristics of the split seal elements.

Accordingly, what is disclosed herein is a split mechanical face seal for providing fluid-tight sealing between a housing and a shaft adapted to rotate relative thereto comprising adjacent, rigid, annular, primary and mating rings formed of a plurality of arcuate ring segments, each defining generally radial, opposed sealing faces, means for joining and retaining the ring segments of each of the rings in rigid connection with the other segments of each ring, whereby each opposed sealing face defined by the rings has a smooth surface devoid of discontinuities around its complete circumference, the joining and retaining means further comprising a resilient split means for the primary ring and a resilient split means for the mating ring, each resilient split means positioning and supporting its associated ring in a generally coaxial relationship with the shaft and with the other ring, so that the sealing face of each ring is in opposite and facing relationship to the sealing face of the other ring, said resilient split means for the primary ring rigidly supporting the primary ring from axial and radial movement, the resilient split ring for said mating ring non-rigidly supporting the mating ring and biasing the mating ring in an axial direction against the primary ring and a split holder means for the mating ring and a split holder means for the primary ring each circumferentially connecting the respective resilient split means to its associated ring in a substantially concentric relationship, each split holder means comprising a pair of semicircular holder members releasably attachable to each other and when in an attached condition, sealingly engaging and compressing to a limited degree at least a portion of each respective resilient split means upon its associated segmented ring, and the seal further comprising a split relative positioning means for maintaining the position of the split mating ring holder means relative to the split primary ring holder means in substantially identical relative axial positions during shaft rotation despite relative rotation between the primary ring holder means and the mating ring holder means and despite temporarily large axial displacements of the shaft relative to the housing.

The invention is now described, by way of example only, with reference to the accompanying drawings, in which:-
Fig. 1 illustrates schematically and partially in section a conventional pump sealed with packing;
Fig. 2 illustrates in cross-section a conventional mechanical face seal arrangement for use with a stuffing box housing from which the packing has been removed;
Fig. 3 illustrates a known split seal arrangement for use with a stuffing box housing from which the packing has been removed;
Fig. 4A illustrates in cross section a split seal according to US Patent No 5,114,163 for use with a stuffing box housing from which the packing has been removed;
Fig. 4B illustrates an elevational side view of the split gland plate utilised in the seal illustrated in Fig. 4A;
Fig. 4C illustrates a detailed cross section of the mating sealing element utilised in the seal illustrated in Fig. 4A;
Fig. 5A illustrates in detail a joint between two ends of an annular sealing element of Fig. 4A;
Fig. 5B illustrates a back view of an annular sealing ring ready for splitting for use with the seal illustrated in Fig. 4A;
Fig. 5C illustrates a cutaway detailed view of the joint of two halves of a holder for use with the seal illustrated in Fig. 4A;
Fig. 5D illustrates in cross-section a detailed view of a compression gear for use with the seal illustrated in Fig. 4A;
Figs. 6 and 7 schematically illustrate the compensating characteristics of the seal illustrated in Fig 4A, during periods of misalignment between the shaft and the stuffing box housing;
Fig. 8 illustrates an alternative embodiment according to US Patent No 5.114,163 utilising a thrust bearing;
Fig. 9 illustrates an alternate embodiment according to US Patent No 5,114,163 having a balanced seal configuration in the split seal;
Fig. 10 illustrates an embodiment according to the present invention;
Fig. 11 illustrates another embodiment of the present invention; and
Fig. 12 is an alternative embodiment of the invention.

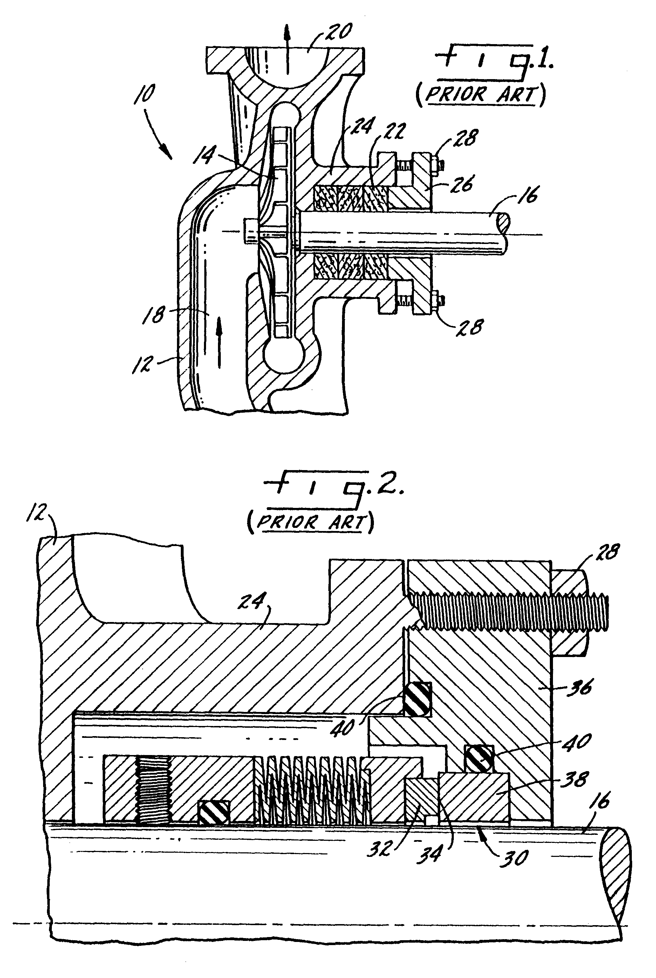

An example of conventional packing in a stuffing box is shown in Fig. 1, which illustrates a pump 10 comprising a housing 12, impeller 14 driven by a drive shaft 16, a fluid input chamber 18 and a fluid output chamber 20. Fluid is normally pumped by the impeller 14 through the chambers 18 and 20 in the direction of the arrows.

Packing 22 is intended to prevent leakage of the pumped fluid to the exterior along drive shaft 16. Packing 22 is conventionally jam packed within stuffing box housing 24 into sealing contact with drive shaft 16 by packing follower 26. The pressure exerted by packing follower 26 against packing 22 is increased or decreased by tightening or loosening gland nuts 28, two of which are shown.

Fig. 2 illustrates the prior art method of replacing packing 22 with a rotary mechanical seal 30 having a seal ring 32 with a sealing face 34, usually lapped to a high degree of flatness. For an assembly not having a split seal, such as that described in US Patent No 3,961,799, installation is preceded by removal of the means providing a driving force to the shaft 16, such as a motor (not shown), and then removal of the follower 26 and withdrawal of the packing 22. After removal of packing follower 26 and packing 22, rotary mechanical seal 30 is installed.

A special gland plate 36 having a mating ring 38 and O-rings 40 is fastened to stuffing box housing 24 by means of gland nuts 28. Gland plate 36 must be fabricated to fit each size stuffing box. Since each size of drive shaft 16 normally has three sizes of stuffing boxes for various sealed, shafted equipment, this means that a special gland plate must be made for each size stuffing box housing.

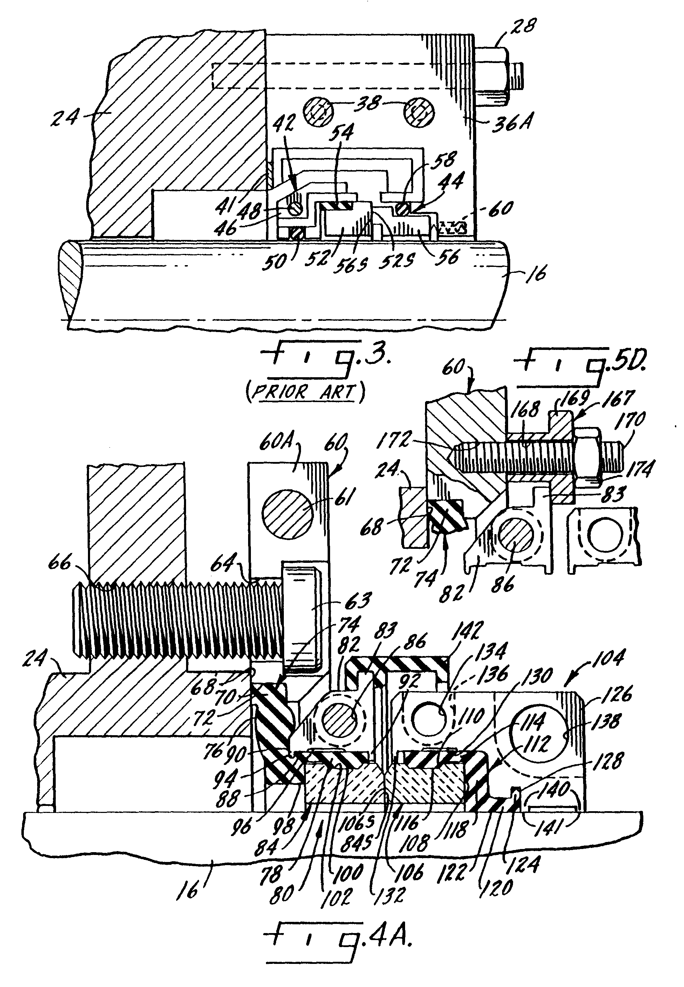

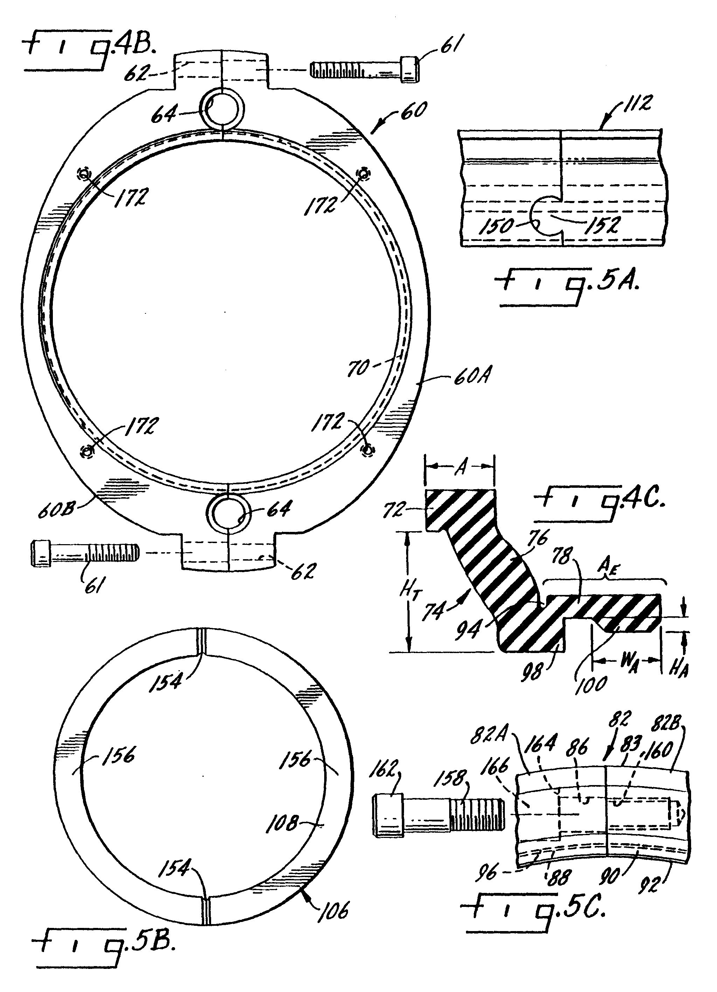

Fig. 3 illustrates a cross-sectional view of a split seal design of a seal for replacing packing in a stuffing box, as is shown and described in US Patent No 4,576,384. A special gland plate assembly comprises a first gland plate half 36A that is attached to a second gland plate half (not shown) by socket head cap screws 38. The gland plate assembly is connected to the stuffing box housing by gland nuts 28. A split elastomeric face gasket 41 seals the gland assembly to the stuffing box housing 24. The gland plate assembly houses a rotary split seal ring assembly 42 and a stationary split seal ring assembly 44.

Rotating split seal ring assembly 42 is held in place around shaft 16 by holder halves of which one half 46 is shown with attachment means, for example, socket head cap screws 48.

Tightening cap screws 48 clamp the holders 46 over O-ring 50 thus sealing the holder 46 to the shaft 16. Rotating ring 52, also split, is sealed to holder 46 by a split elastomeric boot 54.

Stationary split seal ring 56 is sealed to the gland plate assembly 36A by an O-ring 58. Plural springs disposed in appropriate bores in gland plate assembly 36A, of which one spring 60 is shown, provide an axial bias against the stationery ring 56 to bring together the sealing faces 52S and 56S of the respective rings 52 and 56. The seal as described in US Patent No 4,576,384 requires an undue amount of effort and expertise for installation. Installation of the seal requires fluid sealing of joints in split elastomeric elements 40,50,54,58 in at least four positions.

Moreover, all of the separate elastomeric elements are installed simultaneously with at least four other rigid elements, each of which is split. The number of elements that must be kept in place during the installation process while simultaneously screwing together split parts is burdensome. Occasions to misjoin and misalign the split elements either in relation to their split corresponding parts or in relation to the other elements of the respective assemblies 42 or 44 are prevalent.

Fig. 4A is a cross-sectional view of the split seal according to US Patent No 5,114,163. Stuffing box housing 24 and shaft 16 are in the relative positions as those shown in the prior art devices of Figs. 1 to 3. Fig. 4B illustrates in an elevational side view a gland plate assembly 60 having two split halves 60A and 60B. The split halves 60A and 60B forming the gland plate assembly 60 are identical to each other and are split along a vertical plane as shown in Fig. 4B. One half 60A is rotated 180° relative to the other half 60B when the two halves are joined to each other to form gland plate assembly 60.

Referring now to both Figs. 4A and 4B, the gland plate assembly 60 includes an attachment means, such as socket head cap screws 61, which screw into a threaded hole 62 in the respective complementary half gland plate to form the gland plate assembly 60 that completely surrounds the shaft.

The gland plate assembly is attached to the housing 24 directly, as in the prior art, by bolts 63, one of which is shown in Fig. 4A having been inserted through a hole 64 in gland plate assembly 60. A bolt head abuts a shoulder in hole 64 as the bolt 63 screws into a threaded hole 66 in housing 24. The precise technique for mounting the gland plate 60 onto stuffing box housing 24 is not critical and other methods, such as those shown in the prior art can be utilised. One size of the gland plate assembly 60 can be made to fit a majority of stuffing box housings, the only requirement being a clean lateral surface 68 on the stuffing box housing 24. Threaded bores 172 shown in Fig. 4B are evenly disposed around the circumference of gland plate assembly 60 and will be used in the installation of the seal as is discussed below with reference to Fig. 5D.

Referring now to Figs. 4A and 4C, a gland plate assembly 60 includes a recessed inner diameter 70 which engages a lip 72, itself integrally attached at an outer diameter of a split elastomeric sealing element 74. Sealing element 74 is alternatively referred to as a compression ring 74 because one function is to compress the elements of the seal together. The axial dimension A of lip 72 should be just slightly larger than the width of recess 70 but the lip 72 should easily fit within the inner diameter of the gland plate assembly 60. The gland plate assembly 60 will squeeze the lip 72 against the lateral surface 68 of stuffing box housing 24 when assembled. A clean lateral surface 68 will thus ensure a close, tight fit and a good seal between the gland plate assembly 60 and the stuffing box housing 24.

Sealing element or compression ring 74 includes a middle section 76 which biases an essentially tubular extension 78 at the opposite end of sealing element 74 from lip 72. Tubular extension 78 engages a stationary split seal ring assembly, which in this embodiment is a mating ring assembly, and is generally designated by the numeral 80 in Fig. 4A. The sealing element 74 is constructed in a way that when fully assembled, it seals against leakage of fluid under moderate pressure from one side of the seal to the other. The sealing properties will be discussed below. Fig. 4C shows a cross-section view of sealing element 74 in a non-stressed position, whereas the view of Fig 4A shows the sealing element 74 in a stressed position.

The resiliency of the middle section 76 of elastomeric element 74 together with the structure of component parts of the ring assembly 80 create an axial biasing force which pushes the interconnected ring assembly 80 away from the stuffing box housing 24. Moreover, this biasing force is adjustable since the amount of force provided in the axial direction depends on the axial position of ring assembly 80. For example, a greater axial biasing force will be provided if the sealing element 74 is compressed to a greater degree by shifting the ring assembly 80 toward the stuffing box housing 24.

Stationary primary ring assembly 80 comprises a split holder 82, including the component parts, 82A and 82B, and a split mating sealing ring 84, having a sealing face 84S. Holder 82 comprises two halves 82A, 82B, each of which includes a through hole 86 for insertion of a bolt 162, further described with reference to Fig. 5C below. Each of the two bolts will engage a corresponding screw-threaded hole on the complementary half of holder 82 and tightening of the bolts will form a unitary annular assembly for holding and positioning the stationery mating sealing ring 84. An annular flange 83 extends from the circumferential outer edge of holder 82.

Holder 82 comprises a hard material, such as metal, and at its inner diameter portion 88 provides support to the outside surface of tubular extension 78. An inner diameter portion 88 is defined by a flange member 90 at one end and a second flange member 92 at the other end. Flange member 90 fits into a corresponding groove 94 in the tubular extension 78.

Inner diameter portion 88 further includes a recess 96 which can collect any excess elastomeric material which results from compression of tubular extension 78. Similarly, tubular extension 78 does not extend to the total axial width of inner diameter portion 88, i.e up to flange member 92, and thus provides a volume into which excess compressed elastomeric material from tubular extension 78 can extend when holder 82 is screwed together.

The inside surface of tubular extension 78 engages mating sealing ring 84. Sealing ring 84 comprises a pair of split halves that are joined together and surrounded on the outer circumference by tubular extension 78. A flanged portion 98 of tubular extension 78 provides axial support to sealing ring 84 and biases the ring 84 away from the stuffing box housing 24. An abutment 100 on the inside surface of extension 78 fits snugly into a reciprocal shallow groove detent 102 in the circumference of sealing ring 84.

Sealing member 74 provides axial, radial and circumferential support to sealing ring 84, and also seals the passage between ring 84 and holder 82. The sealing member 74 also seals the housing 24 against the gland plate assembly 60 by compressing lip 72 against surface 68. The sealing member 74 also provides an axial biasing force to the ring assembly 80.

The dimensions of sealing member 74 are dependent on the diameter of shaft 16 and on the remaining elements with which sealing element 74 engages, such as primary ring 84 and gland plate assembly 60. Certain dimensions, such as the axial width A_{E} of tubular extension 78 and the height H_{A} and width W_{A} of the abutment 100, can be set at standard values which match the standardised dimension of the ring groove and the holder for different size seals. The height H_{T} of the transition portion 76 may also be set to a standard height as long as H_{T} is large enough to enable sealing lip 72 to engage the surface 68 for a majority of sizes of stuffing box housings 24.

Referring again to Fig. 4A, rotating split seal ring assembly, generally designated 104, in this embodiment is a primary ring assembly. It includes a split primary sealing ring 106, having a sealing face 106S which is in direct, opposing relationship to face 84S of the mating ring 84. A surface 108 extends radially at an opposite side of ring 106 in a plane generally parallel to sealing face 106S. The split halves of the sealing ring 106, when joined, form an annular member with a detent 110, similar to detent 102 on ring 84, for receiving an abutment member which together facilitates the axial and radial positioning of ring 106.

Ring assembly 104 also comprises a rotating elastomeric sealing element 112 that has a tubular extension portion 114 that fits around and provides support to the primary sealing ring 106. An abutment 116 disposed on the inside surface of a tubular extension portion 114 has a shape that is reciprocal to and fits snugly within detent 110 in the outer diameter surface of ring 106. Transition portion 118 of sealing element 104 provides axial support to the radially extending surface 108. The elastomeric properties of tubular extension portion 114 and transition portion 118 effectively seal ring 106 to prevent fluid from passing between ring 106 and sealing element 112.

Sealing element 112 further comprises a shaft sealing portion 120 having an inside surface 122 which effectively seals the fluid path between element 112 and shaft 16. A flanged lip 124 at the end of shaft sealing portion 120 cooperates with a rotating holder 126 to seal the shaft sealing portion 120 against the holder 126. Insertion of the lip 124 into a grooved detent 128 in the inside surface of holder 126 and compression of the shaft sealing portion provides good sealing capacity.

The inside surface of holder 126 generally follows the outline of the outside surface of sealing element 112 so as to create a more effective seal between the holder 126 and sealing element 112 and to rigidly support ring 106. Holder 126 also provides a shallow groove 130 and a space between flange 132 and tubular extension portion 114 for receiving excess elastomeric material from element 112 when it is compressed in the assembled position. The sealing element 112 is split as are all the elements of the rotating ring assembly 104. The axial and radial dimensions of sealing ring 106 and of sealing element 112 may also be matched to standard values so that the sealing element may be usable with different size shafts.

The rotating holder 126 is split in two halves, one half of which is shown in Fig. 4A. Each half comprises a through hole 134 with a flanged abutment 136 (shown in phantom). A bolt (not shown) is passed through hole 134 and its head engages the flanged abutment 136. The bolt is screwed onto a threaded bore (not shown) in the complementary half of the holder 126 to unite the holder. As the bolt is screwed into the complementary half of holder 126, the assembled unitary holder provides sealing pressure on the sealing element 112.

A second through hole 138 may be provided to thoroughly secure the holder 126 about the shaft 16. The holder 126 has a pair of flanged, annular supports 140 having an inner diameter surface 141 which directly contact shaft 16. The supports 140 are the base which maintains the holder 126 in a predetermined secured position in the axial direction along shaft 16. Tightening of the bolts (not shown) which fit through holes 134 and 138 provides a positive drive capability that results in friction engagement of the shaft 16 with the support surface 141 and with surface 122 of element 112. The positive drive capability avoids axial and circumferential translation of the rotating mating split seal ring assembly 104 with respect to the shaft 16. The holder 126, as is holder 82, also disposes two identical halves at 180° relative to each other for attachment, much as is the gland plate assembly 60 shown in Fig. 4B.

The ability to slide the ring assembly 104 along the shaft 16 to a predetermined position permits the assembler of the split seal device to pre-stress the amount of axial spring force which the sealing element 74 provides in biasing the sealing face 84S against sealing face 106S. The amount of spring force provided by element 74 is dependent on the axial position of stationary mating ring assembly 80 which in turn depends on the axial position of the rotating primary ring assembly 104. The operator can slide the rotating ring assembly 104 to the predetermined position along shaft 16 to provide exactly the axial spring force which is desired from the sealing element 74. The pre-stressing capability of this seal is an important characteristic for effective sealing of devices.

An optional elastomeric cover guard 142 is disposed over flange 83 of the stationary holder 82. A detent in the inner surface of guard 142 fits snugly over the flange 83. The guard protects the seal and the sealing faces 845 and 106S from debris. The guard also deflects any of the sealed fluid which is slinging out of the seal faces as the shaft 16 and seal ring 106 rotate at high speed.

Assembly of the seal is performed easily and efficiently. Using the replacement of packing by a mechanical seal as an example, the packing is first removed from the stuffing box housing 24. An elastomeric sealing element 74 having predetermined dimensions, as shown in Figs. 4A and 4C in cross-section, is provided for circumferentially press-fitting within the gland plate recess 70. Manufacture of the sealing element 74 and of the sealing ring 84 precedes their assembly into a seal.

The sealing element 74 may be manufactured by forming an entire sealing element ring having the desired dimensions and then cutting through the ring with a knife. Cutting or splitting the ring will permit slipping the sealing element 74 around shaft 16. The preferred technique of cutting the sealing element 74 is straight radial cut. Alternatively, the cut may be made at an angle to the perpendicular, thus allowing some play in fitting the cut ends together during assembly. An angled cut also provides better sealing characteristics when the two cut ends are pressed together during assembly. As will be discussed below, the sealing properties of sealing element 74 are further enhanced by the seal design, which relies on the hoop stress inherently present in the middle section 74 of the sealing element 74 to provide a sealing capacity for fluids even if the fluids are under moderate pressure.

An alternative technique is to have a long, wound coil of extruded elastomeric material having a cross-section as shown in Figs. 4A and 4C. The required predetermined length which will fit around recess 70 of the coil is cut, preferably at an angle. Different lengths can be cut to fit different sizes of shafts used in pumps or turbines. Using sealing element 112 as an example, the cut can be made by a special cutting jig so that two interlocking round ends 150 and 152 of the coil length, shown in Fig. 5A, can be spliced together to form an effectively continuous annular sealing element. Alternatively, a dovetail shape (not shown) may be cut and spliced to form the sealing element 74.

The two halves 60A and 60B of the gland plate assembly 60 are then brought together, making sure that the lip 72 of sealing element 74 is within the recess 70 in the inner diameter of gland plate assembly 60. The gland plate assembly 60 is screwed together by bolts and is then brought against stuffing box housing 24 with care to insure that lip 72 is flush with the surface 68 around the complete circumference of recess 70. A thin film of sealant, such as RTV SEALANT made by Dow-Corning Corp., preferably is coated onto surface 68 of the stuffing box housing 24 where the lip 72 of compression ring 74 will contact so as to increase the sealing capabilities. The gland plate assembly 60 is then attached to the stuffing box housing 24 by screwing bolt 63 into threaded bore 66. At this stage, the bolt 63 should not be tightened completely in bore 66. The two halves of stationary primary ring 80 are then assembled by placing them into the inner diameter of tubular extension 78 one at a time, making sure that the sealing face 84S, having a bevelled outer edge, faces outward. The other half of the sealing ring 84 should be placed into the tubular extension with care, making sure that the split in the sealing ring 84 is 90° relative to the split in the compression ring 74. Disposing the split at a 90° angle provides better sealing capability.

The two halves of the stationary primary ring 84 match perfectly at the joint ends because of the technique by which they are manufactured. Manufacture of sealing ring 106 is identical and will be herein described by way of example.

Fig. 5B illustrates ring 106 in a front view of the radially extending surface 108. The ring is first manufactured as an integral ceramic or carbon sealing ring 106. The sealing ring 106 is then lapped to a smooth, optically flat finish as is done with a sealing ring which is not intended for splitting. Two diametrically opposing notches 154 are then ground into surface 108 and around the edge of surface 108 and into the inner diameter of the ring. The notches should be ground to a sufficient depth to cause slight weakness in the ring but not so deep that the ring fails to maintain its sealing properties. Optimally, the depth of notches 154 should be about 10% of the thickness of ring 106, or about 10% of the distance between faces 106S and 108.

A tool with a cutting edge (not shown) is then placed in the notches and pressure is carefully exerted on the face 106S or ring 108 at points approximately 90 degrees from the notches 154 on the ring, or at about the areas designated 156 on the ring. Exerting careful but steady pressure on the back side 108 against the ring 106 causes the tool edge to create a stress at the notches 154. The pressure at points 156 is increased until the ring snaps into two pieces at the notches. The junction of the two pieces will be jagged, but the technique forms two perfectly matching surfaces that fit together well in a joint that is apparently continuous across the ring surface 106S. The characteristics of the jagged surfaces between ring ends also provides a much better sealing capability than does a flat end joint.

Returning once again to assembly of the seal with reference to Fig. 4A, the ring 84, which has been manufactured using the above technique, is jointed together and fit into tubular extension 78. Abutment 100 fits within the shallow groove 102 of ring 84. Care must be given to ensure the meshing of the jagged surfaces of the split ring. A smooth, flat surface 84S capable of sealing is provided by the joined ring 84.

Two halves of stationary holder 82, also referred to as a clamp ring 82, are then brought together from the outside, and are press fitted around tubular extension 78. The inner diameter of the two halves of stationary holder 82 are preferably lightly lubricated with silicone grease, but only at the area immediately surrounding the split.

Fig. 5C illustrates how the two halves 82A and 82B are bolted together by a bolt 158 which fits through hole 86 in holder half 82A and screws into a threaded bore 160 in the complementary holder half 82B. Socket head 162 of bolt 158 abuts against the surface 164 of a recess 166 cut out from the circumference of the end of holder half 82A. Screwing the bolt 158 into the threaded bore 160 brings the head 162 within the recess 166 to obtain a relatively uniform circumferential profile. The holder 82 is screwed together loosely by tightening the screws only a few threads. The split in holder 82 should be circumferentially aligned approximately with the split of the sealing ring 84. The bolt 158 is not visible in a side view of holder 84.

The diametrically opposed ends of holder halves 82A and 82B are joined in an identical manner except that the recess 166 is cut out of the holder half 82B and the threaded bore 160 is in holder half 84A, similar to the gland plate halves 60A and 60B described above with reference to Fig. 4B. The assembly of the seal proceeds much more easily and with fewer pieces to retain in place during the assembly process than in assembly of previously known split seals.

Referring again to Fig. 4A, the gap between shaft 16 and the inner diameter of stationary sealing ring 84 around the circumference must be carefully checked to ensure a concentric relationship between the shaft 16 and ring 84. Axial alignment is also checked both visually and by running a fingernail along the split to see if there is a step at the joint. Careful alignment of the halves may be necessary to provide a flat sealing face 84S. The holder halves are then tightened by screwing bolts 158 until the ends of the holder halves completely touch, checking the radial axial and circumferential alignment of the sealing ring 84 frequently. Gland plate assembly 60 is then tightened down by fully screwing in bolts 63 within bore 66 of the housing 24. Tightening bolts 158 forms a complete mating ring assembly 80 which is ready to be pre-stressed using the compression gear 167 illustrated in Fig. 5D.

Fig. 5D shows in detail a compression gear 167 having predetermined dimensions for setting the desired axial spring force of sealing element 74. Compression gear 167 comprises a hollow, cylindrical tube having a hollow bore 168 and an annular flange 169 extending from one end of gear 167. The hollow bore 168 has a diameter which is large enough to permit easy passage of a bolt 170 through it. The bolt 170 is screw-threaded and screws into a screw-threaded bore 172 (see Fig. 4B) in gland plate assembly 60, which is spaced from bores 64. Tightening nut 174 translates holder 82 toward the housing 24 and necessarily stresses the transition section 76 of sealing element 74 causing it to become stressed.

A plurality of compression gears 167 are disposed around the circumference of gland plate 60. Preferably four compression gears 167, spaced at 90° to each other, will permit even compression of the compression ring/sealing element 74 around the circumference of the holder 82. Careful monitoring of the axial position of the holder 82 relative to housing 24, also referred to as a 'working height', may be necessary to ensure proper installation.

Evenly tightening the nuts 174 further translates the compression gears 167, the flanges 169 of which engage and translate flanges 83 on the outer diameter of holder 82, to a desired axial position or 'working height'. For a shaft size of about 6 inches diameter, it has been found that a working height of about 2.6 inches is appropriate, with the nut 174 having a hollow bore 168 of sufficient length to provide the appropriate working height. A pressure of approximately 150-300 pound load is then provided on the compression ring/sealing element 74, with approximately a 225 pound load being optional for a shaft having a diameter of 6 inches.

Referring again to Fig. 4A, the next step in the assembly is the insertion of the rotating mating ring assembly 104 around shaft 16. Rotating primary ring 106 is first split according to the technique described above with reference to Fig. 5B. For larger shaft diameter installations, the two halves of rotating ring 106 can be joined at their ends and taped together around shaft 16 to facilitate assembly. Sealing element 112 is then wrapped around ring 106 and the two halves of rotating holder 126 are brought around the shaft and the sealing element 112. The sealing element 112 is preferably cut at an angle to the perpendicular so the pressure of the assembled holder 126 squeezes the wedges of the cut sealing member 112 and provides a better seal. Alternatively, a rounded or dovetailed end is cut, with the two ends interlocking as shown in Fig. 5A, to provide an annular seal having good sealing characteristics.

Bolts (not shown) are fitted through holes 134 and 138 and loosely screwed into the corresponding screw-threaded holes (not shown) in the complementary half of rotating holder 126. Reference to Fig. 5C which describes assembly of the stationary holder provides guidance with respect to the assembly of split seal elements. The bolts should be screwed in loose enough to permit the primary ring assembly 104 to slide axially along shaft 16 with little effort. It is important to verify that sealing face 106S is perpendicular to the axis of the shaft 16 at this stage and all throughout the assembly of the seal.

The rotating primary ring assembly 104 is then brought toward the stationery mating ring assembly 80 until the sealing faces 84S and 106S are just barely touching. The mating ring assembly 80 is retained in a pre-stressed position by the compression ring 167, as is described with respect to Fig. 5D above.

The bolts connecting the two halves of holder 126 are then tightened completely. Tightening of the bolts which fit into holes 138 provides a clamping force on the annular flanges 140 at the base of holder 126. The friction between shaft sealing portion 120 and the shaft 16 and between flanges 140 and the shaft 16 fix the position of the assembly 104 relative to the shaft 16 in the axial and circumferential directions. Tightening of the bolt in hole 134 takes the fluid pressure created by the pump from the inner diameter of ring 84.

The structure of the inner surface of sealing element 112, and especially of the matching contour of split seal ring 106 and the inner surfaces of tubular extension 114 and transition portion 118, grips the sealing ring 106 and rigidly supports it in the axial, radial and circumferential directions. Motion of the sealing ring 106 in any direction relative to shaft 16 is thus severely inhibited during operation of the pump. The sealing element 74 also inhibits the motion of sealing ring 84 in the radial and circumferential directions but not in the axial direction. The sealing element 74 provides impetus only for axial motion of the sealing rings of the seal, i.e., for motion of the mating ring assembly 80 relative to the housing 24.

Following tightening of the bolts in holes 134 and 138, the compression gear 167 together with bolt 170 are removed and the spring force of the sealing element 74 will freely bias sealing ring 84 toward sealing ring 106. The biasing force has already been pre-stressed by the torque of bolt 170 acting on compression gear 167 and thus the precise amount of force necessary for creating the sealing capability required by the end user for the particular device is provided.

A significant feature of the seal with regard to sealing element 74 will become apparent from the above description. The sealing element 74 is split along its complete cross-sectional dimension so that it can be installed around a shaft. Both the lip 72 and the tubular extension 78 are compressed by the elements which are being sealed. That compression creates a seal which is good up to fairly high pressures. The middle section 76, however, is unsupported by any hard material elements and fluid under pressure on one side of the sealing element 74 is liable to leak through the split in the sealing element. A significant feature of this seal is the design of sealing element 74 and holder 82 which provide sufficient hoop stress in middle section 76 to counteract the moderate fluid pressures to which the sealing element 74 will be subjected. The hoop stress provides a tension between the lip 72 and extension 78. Flanged portion 90 of the holder 82 provides an inwardly radial stress to middle section 76 that tightens the junction of the two split ends to seal fluid under moderate pressure from leaking through sealing element 74.

The last step in the assembly of the seal is the fitting of the guard 142 over flange 83. Guard 142 also comprises a split elastomeric element and has two ends which are brought together and joined by stapling, gluing or other appropriate means. The guard provides protection of the seal faces from the ambient environment and also acts as a shield for fluid which is slung from the rotating face 106S.

The composition of the materials for each separate component can be customised to achieve the appropriate sealing capability desired by the end user. The gland plate assembly 60 and each of the holder 82 and 126 comprise a hard material such as metal, preferably a noncorrosive metal such as stainless steel. Bolts, nuts and other connectors are also preferably stainless steel.

Typically, the sealing rings 84 and 106 may be made from an appropriate material, such as carbon, ceramic, silicon carbide or tungsten carbide. Combinations of ring materials for each of the rings 84 and 106 are also possible. For example, two silicon carbide rings may be used, or one ring may be made of carbon and the other of ceramic. Other materials may be substituted for those set forth above, as is known in the art.

The sealing elements 74 and 112 comprise a resilient, somewhat flexible elastomeric material. An ethylenepropylene (EPDM) compound having the brand name CRANELAST, sold by John Crane Inc., has been found to work well. Other elastomeric compounds such as Buna-N or AFLAS, available from 3M Corporation, have also worked well in the past as sealing element material, and other materials are known to those skilled in the art. The materials used in the elastomeric elements are chosen with a view toward the fluid which the equipment is intended to pump so that no adverse chemical or physical reaction will result between the elastomeric material and the fluid.

Another important aspect of the invention during operation is the flexing capability of the sealing elements of each of the rings. Shaft 16 is normally susceptible to some play in its axial direction as it rotates, and it may also experience runout conditions. The shape of split sealing element 74 permits it to automatically compensate for these conditions.

Transient or permanent misalignment of the shaft axis relative to the stuffing box housing 24 is compensated by the spring force of the mating ring sealing element 74. Moreover, the shape of the sealing element 74 permits it to provide support to the stationary mating split seal ring 84 in the radial and circumferential directions. The sealing element spring force further provides a bias to the ring 84 in the axial direction around all of its circumference within certain parameters. Figs. 6 and 7 schematically illustrate a shaft 16 which is in, respectively, aligned and misaligned positions with reference to the stuffing box housing 24.

Under aligned conditions, as illustrated in Fig. 6, there is essentially circular symmetry all around the sealing ring assemblies 80 and 104. In particular, the mating ring 84 has an identical spacing and angular position relative to the stuffing box housing 24 around the complete circumference of the ring assembly.

Fig. 7 illustrates in exaggerated form a misaligned shaft 16 relative to the housing 24. The misalignment has been so positioned that the greatest angle of misalignment is shown in the plane through which the cross-section has been taken. The distortion of sealing element 74 has been exaggerated to better illustrate the effective operation of the invention.

As shown schematically in Fig. 7, the stationary mating ring 84 has been angularly displaced from the position shown in Fig. 6, to maintain a parallel relationship between sealing faces 84S and 106S. Axial spring force from the sealing element 74 on ring 84 maintains a positive static seal condition of the sealing faces 84S and 106S at all times during rotation of the shaft 16. The seal is static because the sealing element 74 is compressed to the same degree all around the circumference of the sealing element 74 through a complete rotation of the shaft 16. Other than for the transient events, the sealing element 74 does not distort during any portion of the rotation of the shaft 16. The shape and position of sealing element 74 remains in approximately the same position shown in Fig. 7. Transient conditions may cause the sealing element 74 to temporarily compress or expand, but on average, little distortion of the sealing element 74 will take place. Thus operation of the seal will avoid early failure from deterioration of the sealing element 74 caused by continual flexing due to shaft rotation.

Fig. 7 further illustrates the importance of a perpendicular alignment sealing face 106S of ring 106 with respect to the axis of shaft 16. As shaft 16 rotates, a perpendicularly aligned sealing face 106S will rotate in a plane which does not precess or oscillate.

On the other hand, deviation from a perpendicular relationship will cause an axial oscillation of the sealing face 106S. The oscillation will be frequency dependent on the speed of the shaft rotation, which can exceed 300 revolutions per minute. The response time of the axial spring force provided by sealing element 74 can compensate for some precession or oscillation, but at higher frequencies, the oscillations will tend to maintain a gap between seal faces 84S and 106S which is larger than desired for effective sealing. Continued and extended rotation of the shaft and non-perpendicularly aligned sealing face will lead to ageing and wearing out of the resiliency of sealing element 74. It is therefore important to provide as close to a perpendicular relationship between sealing face 106S and the axis of shaft 16 as is possible.

As illustrated in the view of Fig. 7, the resiliency of the elastomeric material forming sealing element 74 provides a varying amount of axial spring force on different portions of the circumference of assembly 80. However, the inertial momentum provided by the weight of holder 82 (not shown in Fig. 7 for purposes of clarity) maintains a relatively uniform axial biasing force on the ring 84 to keep the sealing face 84S in substantially the same place as the sealing face 106S of rotating ring 106.

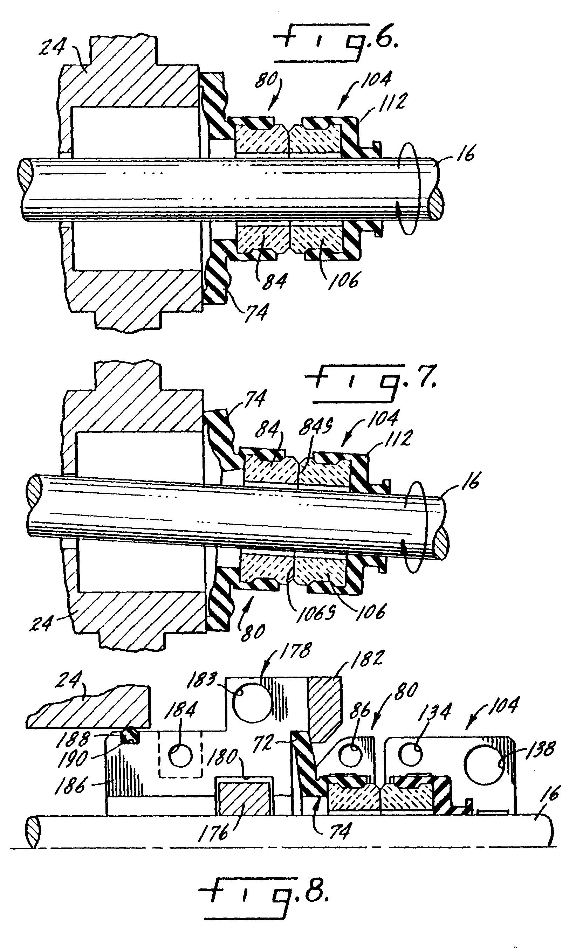

As illustrated in Fig. 8, a thrust bearing 176 may be welded or clamped around the shaft 16. Instead of a gland plate assembly, an adapter ring 178 is disposed around the shaft 16 and an annular groove 180 provides a loose fitting collar for the thrust bearing 176. An adapted gland plate 182 is suitably attached to the adapter ring 178 and retains the lip 72 in compression against the adapter ring 178. The remaining elements of the seal ring assemblies 80 and 104 are identical to those described above.

Thrust bearing 176 acts to maintain an appropriate axial position of the adapter ring 178 relative to the shaft. Rotation of the shaft 16 and the thrust bearing 176 does not affect the adapter ring 178 since there is only a slight frictional contact between the annular groove 180 of ring adapter 178 which defines the collar and the thrust bearing 176. As the shaft 16 and thrust bearing 176 are axially translated, one or the other of the radial surfaces of the thrust bearing also translates the collar and ring adapter in the direction which the shaft is moving. The movement of the ring adapter 178 also necessarily will translate the stationary mating ring assembly 80. Of course, rotating ring assembly 104 fixedly attached to shaft 16 will be translated by axial motion of the shaft.

Ring adapter 178 also is a split element and requires a bolt to be inserted through the bolt holes 183 and 184 for joining the two halves together. The structure and procedure is similar to the bolts utilised in holes 86,134 and 138. A tubular extension portion 186 of ring adapter 178 fits slidably within the stuffing box housing 24. The housing 24 and ring adapter 178 encloses an O-ring 188 within an annular groove 190 at the end of the extension portion 178 which creates a seal in the fluid path between the housing and the adapter.

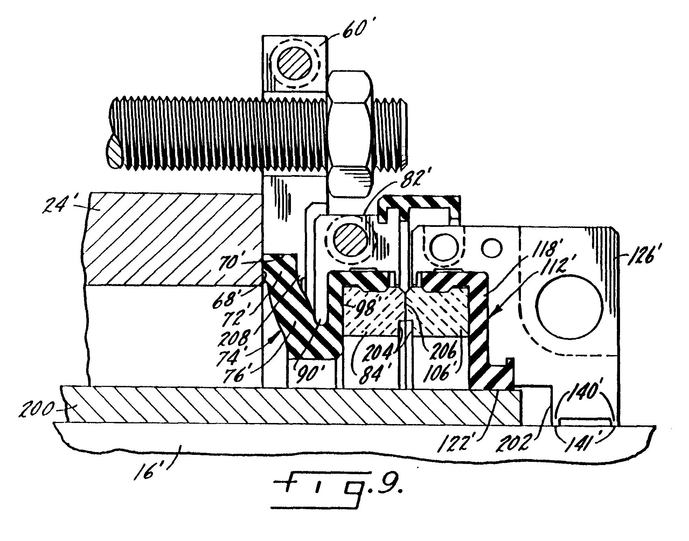

Fig. 9 illustrates a variation of the split seal illustrated in Fig. 4A, where like elements are indicated by identical numerals having a prime annotation.

The embodiment of Fig.9 has been particularly designed for applications having large shaft diameters. It has been found to work particularly well for seals installed with shaft diameters of between 7 inches to about 30 inches.

The embodiment shown in Fig. 9 is different from that of Fig. 4A in several respects. In particular, the Fig. 9 embodiment introduces a sleeve 200 on which rests the inside surface 122' of the shaft sealing portion of sealing element 112'. The rotating holder 126' has a step 202 which accommodates the sleeve 200. The annular supports 140' of holder 126' directly contact the shaft 16' at the inside surfaces 141'.

Other specific differences become apparent from a close comparison of the two embodiments of Figs. 9 and 4A. The flanged portion 98' of sealing element 74' is longer in cross-section, and of wider diameter when viewed along the centreline, so as to allow greater distance between the shaft 16' and the stationary ring 84'. The flange member 90' of stationary holder 82' is correspondingly longer in the cross-sectional view of Fig. 9. The flange member 90' provides a closer fit and greater support to ring 84' by biasing the sealing element flanged portion 98' against the ring 84'. This arrangement of the longer flanged members 90',98' provides increased hoop stress to both the middle section 76' and the intermediate part between the middle section 76' and the flanged portion 98'.

Similarly, the transition portion 118' is correspondingly longer in cross-section and is also matched by a wider axial diameter of the rotating holder 126', which provides support to rotating ring 106'.

It is also important to note the recessed grooves 204 in each of the inner diameters of rings 80' and 106'. Grooves 204 cause the rings 84' and 106' to contact each other only at a surface 206 close to the ring outer diameters.

Another difference shown in the embodiment of Fig. 9 is the wider axial diameter of the gland plate 60', which includes an annular flange extension 208 at the inner diameter of the gland plate 60'. Moreover, the recessed inner diameter 70' of the gland plate 60' is deeper and encompasses the majority of the sealing lip 72'. The protruding flange extension 208 extends inwardly from the inner recessed diameter 70' and firmly engages lip 72' to create a seal against the lateral surface 68 of the housing wall. This arrangement is designed to withstand higher pressures generated by the device which is being sealed. In most other respects the seal shown of Fig. 9 is identical to the embodiment shown in Fig. 4A.

The design of the embodiment of Fig. 9 is balanced and permits the seal to be used with shafts of greater diameter. The seal is further able to withstand somewhat higher pressures. The balanced design results from the approximately equal pressure which is exerted on the contact faces 206 of the rings 84' and 106' and on the pressure side of the seal. The pressure side abuts the shaft sleeve 200 and stuffing box housing 24', and the seal separates the pressure side from the atmosphere. The pressure from opposite sides of the ring 84' is exerted in opposite directions and tends to cancel out the total fluid pressure on the stationary ring assembly. Only the biasing force of the sealing element 74' provides the force acting on the stationary ring 84'.

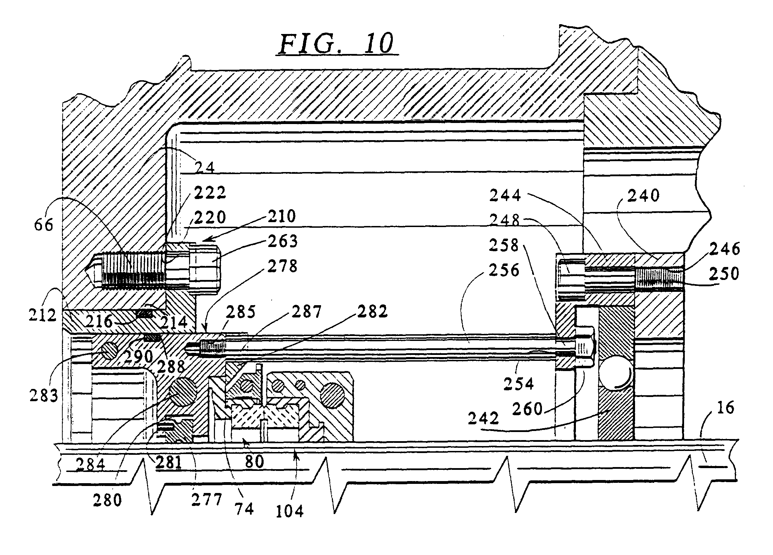

The present invention is a modification of the seal illustrated in Figs. 4A to 9 and the embodiment illustrated in Fig. 10 includes a number of elements which are common to the seals illustrated in Figs. 4A to 9, like elements will be designated by an identical reference numeral. Where similar, but not identical, elements are shown, the elements will be designated by a reference numeral with a digit prefix in a different hundred series.

The split seal elements of the embodiment of the present invention illustrated in Fig. 10, specifically the elements of the primary ring assembly 104 and of the mating ring assembly 80, are essentially identical to the corresponding elements illustrated in Figs. 4A, 4C, 5B and 5C. The attachment of the ring assemblies 80,104 to the shaft 16, Fig. 10, are essentially identical to the corresponding attachment structure and procedure of the ring assemblies 80,104 of the embodiments of Figs. 4A and 8.

The split gland plate 282 may also be identical to gland plate 82 (Fig. 4A), but is shown with a smaller outer diameter to accommodate smaller diameters of those elements which are adjacent the gland plate 282. In other respects, gland plate 282 is attached to an adapter ring 278 by a plurality of screws (not shown), similar to the attachment of gland plate 182 to the adapter ring 178 (Fig. 8), with sufficient overlap of the inner diameter edge of the gland plate 282 over the compression ring 74 to retain the sealing lip 72 in compression against the adapter ring 278 and thus, to maintain seal integrity.

A significant difference in the embodiment of Fig. 10 from the embodiment of Fig. 8 is the lack of a thrust bearing. Thus, the adapter ring 278 is not axially translatable relative to the shaft 16 because a mechanism to maintain a constant relative position between the shaft 16 and the adapter 278, according to the present invention, will be explained below. The adapter ring 278 is axially translatable with the shaft relative to the housing 24 during rotation of the shaft 16.

Adapter ring 278 comprises a pair of split semicircular members attached to each other by bolts 283,284 in accordance with the attachment of adapter ring 182 by screws (not shown) which are inserted and tightened within corresponding apertures to provide a single, integral annular adapter ring. Along an inner diameter wall of the adapter ring 278, an annular groove 280 is disposed for surrounding a bushing 277. The inner diameter dimension of the adapter ring 278 is greater than the diameter of shaft 16 so that after assembly, the adapter ring 278 does not come into contact with the shaft 16. The outer diameter of adapter ring 278 is smooth and is in the shape of a cylinder with an axial centerline coincident with the centerline of shaft 16. An annular groove 290, disposed along the outer diameter cylindrical surface, encloses an O-ring 288 which provides for sealing the adapter ring 278 against an inner diameter surface, as will be explained below, similar to the function provided by groove 190, and O-ring 188 (Fig. 8). The cylindrical shape of the outer diameter of adapter ring 278 lends itself to essentially unobstructed axial movement within the inner diameter axial surface of the bore.

A plurality, preferably four, of threaded bores 285 extending along an axial direction are equidistantly disposed around the periphery of the adapter ring 278. The threaded holes 285 are disposed radially outwardly of the seal ring assemblies 80,104 so that there is sufficient room for clearance of other elements which may be threaded into holes 285. The gland plate 282 also includes cutouts or apertures 287 which correspond to the threaded holes 285 and provide clearance for attaching such elements into the threaded holes 285, as will be explained below.

The annular groove 280 substantially surrounds the bushing 277. The bushing 277 is compressed by the groove 280 around the shaft 16. One or more pins, such as pin 281, are inserted within corresponding apertures disposed in the radially extending sidewall of groove 280 and the radially extending wall of the bushing 277 in order to maintain the bushing 277 stationary relative to the adapter ring 278 during shaft rotation. The shaft rotates within the inner diameter of the bushing 277, which is held in place by the walls of the annular groove 280 and by pin 281. The bushing 277 may comprise a rigid but flexible material which provides slideability against the outer diameter surface of shaft 16. Bushings made from TEFLON, a material available from DuPont, have been found to adequately provide the necessary characteristics.

The function of the bushing 277 is not to seal within the annular groove, but to provide a partial screen for contaminants or other debris which may be contained in the process fluid within the housing 24. Under normal conditions, the bushing 277 should thus impede the contaminants from entering the space adjacent the sealing rings which could cause damage to the elements of the sealing ring assemblies 80,106.

In the seal illustrated in Fig. 8 the adapter ring 178 is sealed directly onto the housing 24 or stuffing box wall, in the embodiment of Fig. 10 the adapter ring 278 may also be sealed directly to the housing 24. Preferably, however, there is provided a second stationary annular adapter 210 which may be split into two separate semicircular rings which are attached to each other by bolts (not shown) in the way the other rigid split elements are attached. The adapter 210, when assembled, includes a cylindrical tubular extension 212 which has an outer diameter that matches the inner diameter of the stuffing box wall of housing 24. An annular groove 214 provides an enclosure for an O-ring 216 that seals the adapter 210 to the wall of the housing 24.

A radially extending annular flange 220 of adapter 210 includes a radially extending wall which parallels the radially extending wall of the housing 24 and abuts thereto. The flange includes a plurality, preferably four, through bores 222 which permit insertion of a plurality of threaded bolts such as bolt 263. The bolts 263 screw into threaded apertures 66 in the wall of housing 24, much like in the seal illustrated in Fig. 4A.

The threaded bolts 263 retain the adapter 210 in position against the housing 24, and the inner diameter of the stationary adapter 210 provides a smooth cylindrical surface which allows for axial movement of the adapter ring 278 within the annular space provided between the shaft 16 and the adapter 210. Simultaneously, the O-ring 290, made from an elastomer, is provided with a clean, smooth surface against which to seal. Such a clean, smooth surface is not always available along the inner diameter wall of a stuffing box which has corroded over a number of years use in retaining packing material. As noted above, the rigid but flexible bushing 277 has the capability of sliding axially along the surface of the shaft 16, while simultaneously sealing against it.

Unlike the seal illustrated in Fig. 8, which utilises a thrust ring 176 as a mechanism for maintaining the mating ring assembly 80 in the desired axial position relative to the shaft. A unique mechanism, as contemplated by the present invention, for retaining the relative axial position is provided by a connection of the adapter ring 278 to a bearing assembly housing 240 which houses a set of bearings 242. The bearings 242 are attached to the shaft 16 to permit the shaft to rotate within housing 240.

A bearing housing adapter 244, which preferably also is split, is provided for direct attachment to the bearing housing 240 by means of insertion through plural apertures, such as aperture 246, a plurality of threaded bolts 248. Each threaded bolt 248 is screwed into a corresponding threaded bore 250 in the bearing housing 240. Thus, the bearing housing adapter 244 is fixed both rotationally and axially relative to the bearing housing 240 and relative to the shaft 16.

The bearing housing adapter 244 comprises a radially extending flange 252 which also includes a plurality of apertures 254. The number of and disposition of the apertures 254 are identical and correspond to the threaded bores 285 disposed in the adapter ring 278. The apertures 254 are generally at the identical radial distance, relative to the shaft centerline, with the threaded holes 285 and also extend axially so that, when assembled, corresponding threaded holes 285 and apertures 254 have coincident centrelines.

Disposed within the space between each corresponding pair of threaded holes 285, apertures 254 is a threaded rod 256. At one end of rod 256, the threads correspond to the threads on the threaded holes 285 and each rod 256 is threaded into the holes 285. At the other end, the rod 256 comprises a smaller diameter extension 258 which can be inserted through the aperture 254. The end of extension 258 is also threaded, and after insertion through the apertures 254, each rod 260 is attached to the radial flange 252 of the bearing housing adapter 244 by a threaded nut 260 having corresponding threads. Tightening nut 260 effectively rigidly attaches the ring adapter 278 to the bearing housing 240. Thus, the rods 256 cause the ring adapter 278 and the mating ring assembly 80 to move axially together with the bearing housing 240 and with the shaft 16, even though those elements also are not rotating therewith.

Because the primary ring assembly 104 is attached to the shaft 16, it necessarily rotates therewith and also moves axially therewith. Thus, the axial movement of the ring assembly 104 matches the axial movement of the ring assembly 80, connected to the shaft, and the relative spacing between them is maintained such that the seal faces are kept in contact with each other by the compression ring 74 to provide a sealing function through axial movements of the shaft of much greater dimension. That sealing function will be maintained for as long as the O-ring 290 remains in contact with the inner diameter wall of the stationary second adapter 212.

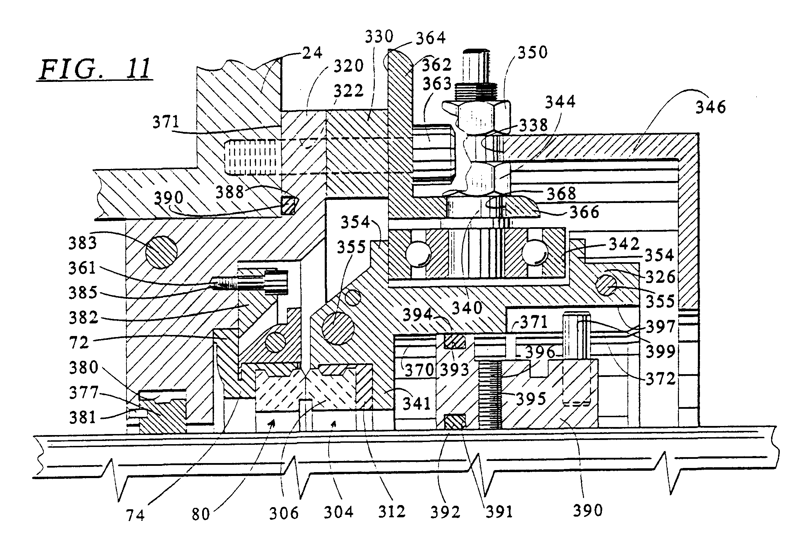

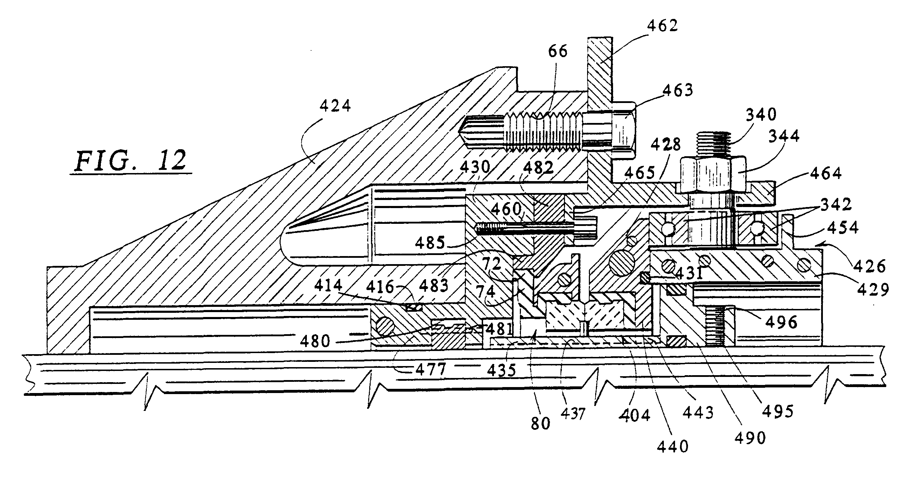

Whereas the embodiment of Fig. 10 maintains the seal assemblies 80 and 104 together by axially moving them in conjunction with the shaft 16, the other two embodiments, illustrated in Figs. 11 and 12, utilise a converse principle, which is to maintain the seal assemblies stationary, while allowing unimpeded axial movement of the shaft 16 within the annular space around which the seal assemblies are assembled. Again, in describing the embodiments of Figs. 11 and 12, those elements which are essentially identical with the elements of Figs. 4A will be designated by the same numerals while similar or like elements will be designated by a numeral which has a first digit prefix in a different hundred series.

Fig. 11 illustrates an embodiment of the present invention having an identical mating ring 80 and compression ring 74 as that of the seal illustrated in Fig. 4A; the seal face configuration is similar to that illustrated in Fig. 9. The primary ring assembly, generally designated at 304, also has a primary ring 306 similar to that illustrated in Fig. 9. There are differences in other respects, and those different elements will be designated by numerals having a first digit prefix from the 300 series.

The compression ring 74 has a similarly disposed lip 72 which is compressed and retained by a gland plate 382 which is identical to gland plate 282 (Fig. 10) and is retained by plural screws 361 (not shown) equidistantly disposed around the periphery of the gland plate 382.

The lip 72 is retained against a stationary adapter 378 which itself is attached directly to a housing 24 by means of a threaded bolt 363 inserted through an aperture 322 in a radially extending flange 320 of the adapter 378 and then threaded into a threaded bore 66 in the housing 24. Bolts 383 join together the two semicircular halves of the adapter 378 in the manner of the adapter 278.

The radially extending flange 320 comprises a radially extending wall 371 which abuts the radially extending wall of housing 24. The body of the adapter 378 also comprises an axially extending cylindrical surface which follows the inner radial axially extending wall of the stuffing box of housing 24, as shown. Appropriate threaded holes provide attachment means for bolts 383 which retain the two semicircular halves of the adapter 378 together, similar to the other rigid split elements. An annular groove 388 in the radially extending wall 371 of flange 370 surrounds an O-ring 390 and compresses a seal between adapter 378 and housing 24.

As described above, the adapter 378 further includes bores 385 for accepting bolts 361 that retain the gland plate 382, and consequently the lip 72 of compression ring 74, against the adapter 378.

Along an inner diameter wall, the adapter 378 includes an annular groove 380 for accepting within it a rigid but resilient bushing 377 held from rotation and axial movement by pin 381. The bushing 377 provides a filtering function for inhibiting large contaminants in the process fluid from entering the space adjacent the seal ring elements, similar to that of bushing 277 (Fig. 10).

Between the flange 320 of the adapter 378 and the socket head of each bolt 363 is an optional spacer 330 and an annular flanged retainer 362. The bolts 363 are inserted through corresponding apertures in the spacer 330 and in one flanged portion 364 of the retainer 362.

Another flanged portion 366 also comprises an aperture 368 through which a bolt 340 is inserted. A bearing assembly 342 is attached to one end of the bolt 340. The other end of the bolt 340 is threaded and a nut 344 is tightened over the threaded bolt 340 to retain the bolt 340 and bearing assembly 342 in place on the flanged portion 366. Optionally, a splash guard 346 may be positioned around the flanged portion 366 before the bolt 340 is inserted. The splash guard 346 includes plural apertures which correspond to the apertures 338 of the retainer flanged portion 366, so that insertion of the bolt 340 will be accomplished through both apertures 338 and 368. A second nut 350 screwed onto bolt 340 tightens and retains the splash guard 346 over the sealing ring assemblies 80,304 as well as over the bearing assembly 342. The guard 346 maintains the seal area free of contaminants and other unwanted debris which can enter the seal area from outside the housing.

The bearing assembly 342 is disposed between two radially extending annular walls 354 of the holder 326. The function of the bearing assembly 243 disposed within walls 354 is to inhibit axial movement of the holder 326 when the shaft 16 is rotating and simultaneously moving in the axial direction, as will be explained below.

The holder 326, as are all of the rigid elements of the split seal, comprises two semicircular split members that are joined together by threaded bolts 355 which are screwed into corresponding threaded bores in the opposite split member, as is explained with reference to Figs. 4A to 9.

The holder member 326 also is dissimilar from holders 126 (Figs. 4A, 8 and 9) in that the holder 326 (Fig. 11) does not come into contact with shaft 16 after the seal is assembled. Accordingly, the base defining the flanged supports 140 (Fig. 4A) have been omitted altogether. Similarly, the shaft sealing portion 120 of the sealing element 112 (Fig. 4A) has also been omitted, so that the corresponding holder base 341 and sealing element 312 are truncated and are disposed radially outwardly of the shaft 16, thus leaving an annular space between the primary seal ring assembly 304 and the shaft 16 which allows for free axial movement of the shaft 16 relative to the primary ring assembly 304.

The primary seal ring assembly 304 is, however, rotating with the shaft 16 during shaft rotation. An annular step recess 370 in the holder 326 is disposed radially outwardly of the base 341 providing an annular space between the shaft 16 and the recess 370. The recess includes a second step 372 which facilitates removal of the shaft, as will be explained below.

A drive sleeve 390 is disposed in the annular space provided by the first step recess 370. The drive sleeve 390 has an inner diameter surface which is approximately the same diameter as the diameter of shaft 16. The inner diameter surface includes an annular groove 391 in which an O-ring 392 has been disposed for sealing between the drive sleeve 390 and the shaft 16. The outer diameter surface is approximately the same diameter as the inner diameter surface of the recessed step 370, and includes a second annular groove 393 in which an O-ring 394 has been inserted for sealing between the outer diameter surface of the drive sleeve 390 and the recessed step 370.

The drive sleeve 390 includes several threaded, equidistantly spaced, radially extending bores 395 into which set screws 396 are screwed. The set screws 396 impinge upon the surface of the shaft 16 and hold the drive sleeve 390 fast to the shaft 16. The drive sleeve, of course, is comprised of two semicircular halves which are joined together by threaded bolts (not shown), as are all of the other rigid split elements.

During seal operation when the shaft 16 is rotating, the drive sleeve 390 rotates together with the shaft. The frictional forces between the O-ring 394 and the stepped inner diameter surface of the stepped recess 370 of the holder 326 causes the holder 326 to rotate together with the shaft and with the drive sleeve.

For greater assurance of coaction, a positive drive mechanism is preferably used in conjunction with the frictional hold of the O-ring 394. The positive drive mechanism comprises one or more pins, such as drive pin 399, which are attached by threads or other appropriate means to a shoulder of the drive sleeve 390. The drive pins 399 extend radially outwardly toward the holder 326 and engage with an axially extending longitudinal slot 397 cut into the inner diameter of the second step recess 372. The width of the slot 397 is of a dimension to permit axial movement of the drive pin 399, but any rotational movement of the pins 399 will cause the pins 399 to engage the walls of the slot 397 to drive the holder 326 rotationally with the shaft 16. Thus, while the holder 326 is caused to rotate together with the drive sleeve 390 and the shaft 16, relative axial movement of the drive sleeve 390 and shaft 16 is facilitated relative to the holder 326. The bearing assemblies 342 permit the holder 326 to rotate with the shaft 16 but inhibit relative axial movement of the holder relative to the housing 243 and the other stationary seal elements.

The axial length of the first recessed step 370 is preferably sufficient to accommodate the maximum expected axial shifts of the shaft 16 during shaft rotation and operation of the operating device. The second recessed step 372 provides a quick and easy means to move the shaft axially for repairs and maintenance of the device elements, such as the impeller. To accomplish this, the shaft connection to the device such as to the bearings (not shown) is first disconnected and the shaft is then slid axially toward the right, as shown in Fig. 11. When the O-ring 394 reaches the step 372, the drive sleeve 390 and shaft 16 are able to move more freely because frictional forces between the O-ring 394 and the step 370 are no longer impeding axial movement of the shaft. As described above, the bushing 377 provides little frictional force because of the flexibility and material comprising the bushing 377 allowing the shaft 16 to slide easily relative to the bushing 377.

After repairs of the device elements are completed, the shaft 16 is again slid into place. This process is facilitated by a truncated frustoconical connection 371 between the two steps 370,372 of the recessed holder 326, which connection pushes into place the O-ring 394 within the annular groove 393.

Referring now to Fig. 12, another customised embodiment of the present invention is illustrated. Many modifications and alternative features are present in this embodiment over that shown in Fig. 11, but in general structure and appearance, this embodiment includes essentially all of the elements and features of the embodiment of Fig. 11. Those features which are different from Fig. 11 will be discussed below while those features of Fig. 11 which are illustrated in Fig. 11 and also appear in Fig. 12 will be discussed only in passing. Where appropriate, those elements which are different will have a '400' series digit prefix and otherwise all of the similar elements will have a '300' digit prefix to indicate their identity with the elements shown in Fig. 11.

The housing type member 424 is a frustoconical structure which can be inserted into a housing stuffing box, such as has heretofore been described. For purposes of discussion of this embodiment, the housing type member 424 will be described as being the housing.

The embodiment of Fig. 12 also utilises a bearing assembly 342 but in this case, the bearing assemblies are attached through a bolt 340 and nut 344 to a flanged retainer 464. The flanged member 464 includes an outwardly radially extending annular flange 462 which is connected to the housing member 424 by a bolt 463. Bolt 463 is threaded into a threaded bore 466 in the housing member 424.

The flanged retainer 464 further comprises a second inwardly radially extending flange 465 which abuts the gland plate 482. Tightening of the bolt 463 on the flange 462 also provides a retaining function on the gland plate 482 by the flange member 465.

A bolt 460 extends through an aperture in the flange 465 and through a second aperture in the gland plate 482 and is screwed into a threaded bore 485 in the adapter 430. Gland plate 482 may include an annular axially extending flange 483 to provide a customised or adjustable connection for the lip 72 of the compression ring 74. As with the embodiment of Fig. 11, the split sealing elements of the seal assemblies 80 is identical to the construction of Fig. 4A and will not be further discussed herein.

The adapter member again is sealed against the housing member through an O-ring 416 in an annular groove 414. The bushing 477 is disposed within an annular groove 480 and is connected to the adapter 430 through pin 481.

The holder member 426 is in effect two separate elements, retainer 428 and bearing housing 429 which are joined together by bolts (not shown) which juncture is sealed by an O-ring 431. The retainer 428 and the bearing housing 429 together provide a structure which is effectively identical to the structure provided by the holder 326 (Fig. 11). Bearing housing member 429 includes a radially extending flange wall 454 which together with one of the side walls of the retainer 428 provides a housing for the bearings 342.

The retainer 428 also is different in this embodiment and shows an alternative positive drive which allows the retainer 428, bearing housing 429 combination to rotate with the shaft 16, but to be independent in axial movement therefrom. The drive sleeve 490 is in most respects similar to the drive sleeve 390 (Fig. 11) and includes a socket set screw 496 set within a threaded radially extending bore 495 to attach the drive sleeve 490 to the shaft 16. However, the drive sleeve 490 also includes a longitudinal axially extending sleeve extension 435 having at least one longitudinal slot 437 into which at least one corresponding extension or rib 443 of the base 440, defining at least one positive drive means, can be slidably inserted. One of the rib extensions 443 may be available for each separate slot 437 in the drive sleeve extension 435. The base extensions or ribs 443 can slide along in the axial direction for the length of the sleeve extension 435 while simultaneously providing a positive drive thereto and to the retainer 428.

Other alternative arrangements of the sealing components of the invention may become apparent to a person of ordinary skill in the art from a full understanding of the present specification. For example, other positive drive mechanisms may be considered or different designs for making the shaft axially independent of the primary seal ring assembly 404 may be designed. Once the inventive concepts described herein are understood, other embodiments and modifications will become readily apparent to a person of ordinary skill in the art. Accordingly, the above embodiments are described and discussed as examples only and do not limit the scope of the following claims.

## Claims

1. A split mechanical face seal for providing fluid-tight sealing between a housing (24) and a shaft (16) adapted to rotate relative thereto, said split seal comprising: adjacent, rigid, annular, primary and mating rings (106, 84) formed of a plurality of arcuate ring segments, each defining generally radial, opposed sealing faces (106S, 84S); means (126, 82) for joining and retaining the ring segments of each of said rings (106, 84) in rigid connection with the other segments of each ring (106, 84), whereby each said opposed sealing face (106S, 84S) defined by said rings (106, 84) has a smooth surface devoid of discontinuities around its complete circumference, said joining and retaining means (126, 84) further comprising: a resilient split means (112) for said primary ring (106) and a resilient split means (74) for said mating ring (84), each said resilient split means (112, 74) positioning and supporting its associated ring (106, 84) in a generally coaxial relationship with the shaft (16) and with the other ring (84, 106), so that the sealing face (106S, 84S) of each said ring (106, 84) is in opposite and facing relationship to the sealing face (84S, 106S) of the other said ring (84, 106) said resilient split means (112) for said primary ring (106) rigidly supporting said primary ring (106) from axial and radial movement, said resilient split ring (74) for said mating ring (84) non-rigidly supporting said mating ring (84) and biasing said mating ring (84) in an axial direction against said primary ring (106); a split holder means (82) for said mating ring (84) and a split holder means (126) for said primary ring (106) each circumferentially connecting said respective resilient split means (112, 74) to its associated ring (106, 84) in a substantially concentric relationship, each said split holder means (126, 82) comprising a pair of semicircular holder members (82A, 82B) releasably attachable to each other and when in an attached condition, sealingly engaging and compressing to a limited degree at least a portion (114, 78) of said respective resilient split means (112, 74) upon its associated segmented ring (106, 84); characterised in that a split relative positioning means(240, 244, 246, 256) for maintaining the position of the split mating ring holder means (82) relative to the split primary ring holder means (126) in substantially identical relative axial positions during shaft rotation despite relative rotation between the primary ring holder means (126) and the mating ring holder means (82) and despite temporarily large axial displacement of the shaft (16) relative to the housing (24).

2. A split mechanical face seal according to claim 1 characterised in that the primary ring (106), the resilient split means for positioning said primary ring (112) and the primary ring split holder means (126) define a primary ring assembly (104); and the mating ring (84), the resilient split means (74) for positioning said mating ring (84) and the mating ring split holder means (82) define a mating ring assembly (80); the split relative positioning means (240, 242, 246, 256) maintaining the position of the mating ring assembly (80) relative to the primary ring assembly (104)

3. A split mechanical face seal according to Claim 1 or 2 characterised in that an adapter (278) is axially displaceable relative to the housing (24) while maintaining a seal thereagainst, said adapter (278) including said split relative positioning means (240, 242, 244, 256).

4. A split mechanical face seal according to Claim 3, characterised in that said adapter (278) further comprises an annular groove keyway, said split relative positioning means (240, 242, 246, 256) further comprising a thrust bearing (242) disposed circumferentially around and being attached to said shaft (16), said annular groove keyway being shaped and dimensioned to fit closely about said thrust bearing (242) while allowing relative rotation therebetween, and said thrust bearing (242) providing a corresponding axial shift to said adapter (278) when said shaft (16) and said thrust bearing (242) are axially shifted.

5. A split mechanical face seal according to Claim 3 characterised by a bearing (242) and bearing housing (240) enclosing said bearing (242), said bearing (242) and bearing housing (240) being attached to said shaft (16), said bearing housing (240) being displaced axially with said shaft (16) but not rotating therewith, said adapter (278) further providing a connection (256) to said bearing housing (240) thereby attaching said adapter (278) to said bearing housing (240), wherein said adapter (278) is axially displaceable in conjunction with said shaft (16), but does not rotate therewith.

6. A split mechanical face seal according to Claim 1 or 2 characterised in that an adapter member (378) which is attached to said housing (24) and said primary ring split holder means (326, 426) further comprises an annular groove defined by two radially extending side walls (354, 454), said groove being shaped and dimensioned to receive a bearing assembly (342) connected to said housing (24, 424), said bearing assembly (342) maintaining the position of said primary ring holder means (326, 426) in the identical axial position relative to said housing (24, 424) while permitting the split holder member (326, 426) to rotate relative to said shaft (16), said seal further comprising a drive member (390, 490) being sealingly connected to said shaft (16) and being axially displaceable relative to said primary ring holder means (326, 426), said drive member (390, 490) simultaneously being sealed against said primary ring holder means (326, 426) during shaft rotation, said drive member (390, 490) further comprising an axially slidable means (399, 443) for rotationally driving said primary ring split holder means (326, 426) rotationally with said shaft (16).

7. A mechanical face seal according to Claim 6 characterised in that said drive member axially slidable means (390) comprises at least one longitudinally extending slot (397) on said split holder means (326) and said drive member (390) further comprises at least one corresponding pin (399) which is shaped and dimensioned to fit within each said slot (397) to permit the drive member (390) axial freedom of movement while simultaneously causing said pins (399) to rotationally drive said primary ring split holder means (326).

8. A mechanical face seal according to Claim 4 characterised in that said drive member (490) comprises a longitudinally extending annular extension (435) having at least one longitudinally extending slot (437), and said axially slidable means (443) comprises a corresponding rib (443) extending from a radially inward portion of said split primary ring holder means (426), one of said ribs (443) being shaped and dimensioned to fit within each said slot (437) to permit the drive member (490) an axial freedom of movement relative to said primary seal ring holder (426) while simultaneously causing said slots (437) to drive said ribs (443), and said primary ring split holder (426), rotationally together with said shaft (16).

9. A mechanical face seal according to any one of claims 6 to 8 characterised in that said split holder means (426) comprises two separate joined segmented annular rings (428, 429) bolted together, one each of said annular rings (428, 429) providing a radially extending wall (454) defining the groove for receiving extending wall (454) defining the groove for receiving said bearing (342).

10. A mechanical face seal according to any one of claims 3 to 9 characterised in that said adapter (278; 378; 478) further comprises an annular circumferential groove (280; 380; 480) for receiving a flexible bushing (277; 377; 477), said bushing (277; 377; 477) being attached to said adapter (278; 378; 478) in surrounding relationship to said shaft (16) and comprising a material which permits said shaft (16) to rotationally and axially move relative to said bushing (277; 377; 477) through a relatively frictionless engagement therebetween.
